# EUROPEAN PATENT APPLICATION

(11) **EP 3 223 130 A1**
(43) Date of publication of application: **27.09.2017**
(21) Application number: 16465509.4
(22) Date of filing: 22.03.2016
(51) Int. Cl.: G06F 3/0488, G06F 3/0482

(54) **METHOD OF CONTROLLING AN INPUT DEVICE FOR NAVIGATING A HIERARCHICAL MENU**

(71) Applicant: Continental Automotive GmbH, 30165 Hannover (DE)
(72) Inventor: Iurascu, Danut-Petru, 300969 Timisoara (RO); Calota, Romeo, 300425 Timisoara (RO); Basangiu, Andrei, 300749 Timisoara (RO)

(57) **Abstract**

A method of controlling a touch-sensitive input device for navigating a hierarchical menu comprises receiving three different types of user inputs: placing an indexing device on the input device, swiping the indexing device towards a selectable item and braking contact with the touch-sensitive input device, and swiping the indexing device towards a selectable item and back to an initial position. Continuous navigation through various levels of the menu, back and forth, is possible as long as the indexing device remains in contact with the touch-sensitive input device. Once contact is broken, the item that was targeted immediately before breaking the contact is selected.

## Description

### Technical Field

The present invention pertains to a method of controlling an input device for navigating through a hierarchical menu and to an apparatus adapted to execute the method.

### Background Art

User menus often provide a large number of selectable options or items. Selectable options or items must be represented on a display in such a way that every option is easily recognizable and selectable. Depending on the environment in which the user menu is used the size of the individual selectable options or items must be chosen to be sufficiently large. For example, when a user menu is to be operated in an environment subject to vibration, shaking or general movement, representing the selectable options or items rather large on a display is usually preferred, for allowing easy selection of a menu option or item by means of a user's finger or other indexing device. Whenever a display area is too small to show all selectable options of a menu in a sufficiently large representation, hierarchical menus may be used. Hierarchical menus typically show general selectable options or items at a higher level of the menu and, once a general selection is made, show a next lower level of selectable options pertaining generally to the previously made selection. For example, a next lower level of a hierarchical menu may provide further adjustment or settings options for a previously selected function. Several levels of a hierarchical menu may be accessed by sequentially selecting corresponding options or items.

Navigating hierarchical user menus on touch screens or touch-enabled devices in which the screen and the touch input are arranged separately often involves moving a finger or other indexing device across a large input area. This may require that a user moves the entire arm, which increases the susceptibility to unwanted arm movements through external disturbances.

### Summary of Invention

It is an object of the present invention to provide a method of controlling an input device for navigating a hierarchical menu that improves on the existing solutions. In particular, it is an object to provide a method of controlling an input device for navigating a hierarchical menu, which reduces the distances to be travelled by a user's finger or other indexing device when navigating and selecting.

Accordingly, a method of controlling a touch-sensitive input device for navigating a hierarchical menu comprises receiving three different types of user inputs: placing an indexing device on the input device, swiping the indexing device towards a selectable item and braking contact with the touch-sensitive input device, and swiping the indexing device towards a selectable item and back to an initial position. Continuous navigation through various levels of the menu, back and forth, is possible as long as the indexing device remains in contact with the touch-sensitive input device. Breaking the contact may be used for selecting the item that was targeted immediately before.

Definition of expressions and terms used in this specification

In the context of the present specification the expression `receiving a user input' is used synonymously with 'detecting the user input'. Further, in the context of the present method, the expression 'selectable items' may represent items triggering one or more actions when selected or targeted by a user input, but may also represent a token for a different level of a hierarchical menu, either higher or lower. Further, in the context of the present method, the expression 'touch-sensitive input device' may include touch pads and displays provided with a touch-sensitive surface. The touch technology used for the touch-sensitive input is irrelevant for the method and may include capacitive and resistive touch sensing as well as temperature-based touch sensing and camera-based touch recognition. In the context of the present method touch technology may also include touch-like gestures performed in relation to a surface, for example, hovering an indexing device within a predefined distance from the surface without necessarily touching the surface. An 'indexing device' includes, inter alia, one or more fingers of a user, a hand-held pointing device, e.g. a touch pen, and the like. Further, in the context of the present method, the expression 'placing an indexing device' refers to bringing the indexing device in a position relative to the touch-sensitive input device without substantially altering the position thereafter. The expression 'swiping an indexing device' refers to altering the position of the indexing device while maintaining contact with the touch-sensitive input device. In case the touch input is a touch-like gesture, 'swiping an indexing device' refers to altering the position of the indexing device in up to two orthogonal directions of the three-dimensional space, typically in a plane parallel to a surface of an input device, while substantially maintaining the position in a third orthogonal direction, and substantially maintaining the predefined hovering distance corresponds to maintaining contact with the touch-sensitive surface in cases where no such touch-like gestures are used. Accordingly, in the gesture context, breaking the contact between the indexing device and the touch-sensitive input device corresponds to increasing the distance between the indexing device and the surface. The expression 'targeted to' refers to a movement or motion having a clearly identifiable trajectory towards a target, i.e. is directed to or pointed at the target. The movement or motion does not necessarily have to be terminated immediately at the target. The expression 'selecting an item' may include triggering an execution of a process associated with the item, i.e. activating a function associated with the item. Terms or expressions defined hereinbefore may have a different meaning in the specification provided below when expressly stated or obvious from their immediate context.

A hierarchical menu to be navigated using a method in accordance with the present invention is constituted by selectable items. Each selectable item is assigned to a respective corresponding second input area arranged within a predefined distance of a first input area of a touch-sensitive input device. The first input area may be an arbitrarily chosen area on the touch-sensitive input device, or an area including or being located adjacent to an object represented on a display. In case of a touch-sensitive display, the input areas are preferably arranged corresponding to the representation of the selectable items on the display. In case of a touch-sensitive input device arranged separately from a display, on which the selectable items are displayed, the first input area may be located in an area corresponding to an area where the object is represented on the display. Depending on the shapes of the display and the touch-sensitive input device corresponding areas may for example be defined by their relative position with respect to borders, their distance from the center and an angle with respect to a line or point defining an angle of zero degrees, or the like. A touch input received by the touch-sensitive input device may be graphically represented accordingly on the display, similar to a mouse pointer, providing visual feedback to the user.

The selectable items currently assigned to second input areas represent a current level of the hierarchical menu. The second input areas may be arranged along one or more circular paths or along a helical path centered on the first input area, or may be lined up along linear paths extending from or passing next to the first input area in different directions. The distribution of the second input areas may be regular or irregular. The shape of the first and the second input areas, within which an item is selectable, may be adapted to the arrangement of the second input areas. For example, when second input areas are arranged along a single circular path around the first input area, the second input areas' shape may be circular, or a circular sector. The size of the second input areas may be the same for all second input areas or may be different, e.g. for facilitating selection of a popular item of the menu. When the touch-sensitive input device is a touch-enabled display the individual second input areas may be graphically indicated. A shape and a size of a second input area need not necessarily correspond to a shape and a size of an icon or a graphical image used for representing a selectable item, but may be smaller or larger, and have a different shape.

In accordance with the present invention, a method of controlling the touch-sensitive input device for navigating the hierarchical menu of selectable items comprises, for selecting a first one of the selectable items accessible from within a current level of the menu, controlling the touch-sensitive input device to receive a first-type user input targeted to that second input area that is assigned to the first one of the selectable items. The first-type user input comprises swiping an indexing device across the touch-sensitive input device, from the first input area to the second input area assigned to the first one of the selectable items, and subsequently breaking contact between the indexing device and the touch-sensitive input device while within the targeted second input area. Breaking the contact may also occur outside the targeted second input area, as long as the user's intention to break contact within the second area can unambiguously be identified. For example, when second input areas are arranged around the first input area in a circular or partially circular manner in a single row, and contact is broken outside of one of the second input areas, away from the first input area, this can be unambiguously identified as breaking contact within that second area.

For activating, accessing or entering a next level of the hierarchical menu related to a first one of the selectable items the method comprises receiving a second-type user input, involving a second input area that is assigned to the first one of the selectable items. The second-type user input comprises swiping the indexing device across the input device from the first input area to the second input area assigned to the first one of the selectable items and back to the first input area. Similarly as explained further above when discussing the selection of an item, a rudimentary movement towards the second input area and back may suffice for recognizing a second-type user input, as long as the user input can unambiguously be identified. In response to receiving a second-type user input one or more next-level selectable items are assigned to corresponding second input areas, replacing at least some of the previous assignments. The next-level selectable items become current-level selectable items for recursive execution of the method. The next level of the hierarchical menu may be a next lower level, i.e. a level that is farther away from the first, top or entry level of the menu. Typically, lower levels of menus provide a more detailed choice for a selected function or operation, whereas higher levels typically provide a choice between various different functions or operations, which are not necessarily strongly interrelated or interrelated at all. In case the next-level of the hierarchical menu is a context or settings menu for a previous-level selectable item associated with an executable process or function, execution of this process or function can be triggered, started or initiated from within the next-level of the hierarchical menu by a first-type user input targeted to a dedicated second input area associated with an execution command.

Generally, in accordance with the present method, an executable process or function is executed only after the contact between the indexing device and the touch-sensitive input device is broken. Thus, as long as the contact is maintained, a user can navigate through various levels of the menu, back and forth, and perform adjustments or other actions related to a process or function prior to executing the process or function.

In accordance with the present method dedicated second input areas are provided for returning to a next higher level of the hierarchical menu and/or for returning to the topmost, or initial, level of the hierarchical menu. These second input areas may be selected by second-type user inputs for effecting changing the hierarchy level.

In each level of the hierarchical menu, where applicable, the second input area associated with the execution command and/or the second input area associated with a return-to-higher-level-function are preferably arranged at the same or a similar position with respect to the first input area. This consistency of design will facilitate intuitive navigation through the hierarchical menu and, over time and through repeated use of the hierarchical menu, reduce the need for the user to visually monitor or supervise the input operations.

For initially activating the hierarchical menu the method comprises controlling the touch-sensitive input device to receive a third-type user input in a first input area of the touch-sensitive input device. The third-type user input comprises placing an indexing device in the first input area of the touch-sensitive input device for at least a predetermined first time period. The first time period may be user settable or user selectable, and prevents unintended activation of the menu in response to spurious contact between the indexing device and the touch-sensitive input device. When the touch-sensitive input device is a touch screen the first input area may be indicated on the screen at any time. The indication may discernibly show a dedicated first input area, e.g. located around or next to a graphical representation of a selectable function or the like. The first input area may also be a not specifically indicated area next to or around a graphical representation of a selectable function or the like. In this case the menu is activated when the user input is carried out in this - not indicated - area. In one aspect of the present invention the hierarchical menu may correspond to a context menu of the selectable function represented by the graphical representation.

The activation of the hierarchical menu in response to the first-type user input causes an assignment of one or more selectable first-level items to respective second input areas. The second input areas are arranged within a predefined distance of the first input area, and their shape may be graphically represented on the display, in addition to a description of the respective assigned first-level item. The description may include text, symbols and/or images. The predefined distance may be selected such that a second input area is located within a distance that can be travelled by a user's finger or a hand-held indexing device substantially without moving the entire hand. Second input areas may be located immediately adjacent or placed separately from the first input area. The assignment process may include retrieving at least parts of the hierarchical menu structure from a memory.

In accordance with the present method the hierarchical menu is kept activated while the indexing device is in contact with the touch-sensitive input device. A temporary interruption of the contact between the indexing device and the touch-sensitive input device may be tolerated when shorter than a predetermined time period, and the menu may be kept activated when such temporary interruptions occur. To this end a timer may be triggered when the contact is interrupted, upon expiry of which a selection of an item is considered valid, and an associated action is performed, or, in case no selection was made, the menu is deactivated or terminated.

In accordance with an aspect of the present method a graphical representation relating to the selectable item associated with a second input area is animated on a display when the indexing device is placed in the second input area for at least a second time period without breaking contact with the touch-sensitive input device. Alternatively, or in addition, a message providing information about the selectable item may be shown adjacent to the graphical representation of the selectable item.

In accordance with an aspect of the present invention a temporary visual, audible or tactile feedback is provided in response to a user input. Audible feedback may include issuing a sound indicating entering or leaving a first input area and/or entering or leaving a second input area. Different sounds may be provided for different actions. Sounds may include spoken text descriptions. Tactile feedback may include vibrating at least part of the touch input device when indicating entering or leaving a first input area and/or entering or leaving a second input area. Different vibration pattern may be provided for different actions. Visual feedback may include providing a visually discernible modification of a display content associated with a first and/or a second input area involved in the user input. Visual feedback may include briefly modifying graphical representations associated with input areas, providing a temporary trace indicating the route the indexing device has travelled, highlighting input areas, etc.

The inventive method allows for navigating multiple levels of a hierarchical menu within a limited area of a touch input device. This allows for touch control of complex hierarchical menu structures within a limited space on a touch input device or a touch screen. Using only a small area for navigating the hierarchical menu may also be beneficial for larger touch screens, since other information displayed simultaneously is not covered or hidden by ever expanding structures of the menu.

Also, if only few selectable items are provided at each level of the menu, and if the placement of common elements is consistent through all levels, the structure is easy to remember and the menu can be navigated without having to look at the display. The inventive method may thus be used advantageously in motor vehicles while driving, since the driver can navigate without having to concentrate on a display for identifying the menu items.

Yet further, using only a limited area of the touch input device reduces the distances to be travelled by a user's finger or other pointing device. This may reduce the susceptibility to unwanted movements across the selection area due to external disturbances, e.g. by allowing a user to place his or her arm on an armrest. In order to fully take advantage of this aspect of the invention the predefined distance in which the second input areas are arranged with respect to the first input area corresponds to an average distance a human index finger, middle finger or thumb can travel without significantly moving the entire hand.

The present invention may be used in any kind of device requiring a user to navigate a hierarchical menu, including portable devices, such as mobile phones, tablet computers, and multimedia players, and may also be used in automobiles, aircrafts and the like.

### Brief Description of Drawings

In the following section the inventive method and apparatus will be described with reference to the drawing. In the drawing
- Fig. 1: shows three representations of a touch screen at different stages of one aspect of the inventive method;
- Fig. 2: shows a first exemplary general arrangement of first and second input areas in accordance with the inventive method;
- Fig. 3: shows a second exemplary general arrangement of first and second input areas in accordance with the inventive method;
- Fig. 4: shows a simplified representation of a first-type user input in an exemplary arrangement of first and second input areas;
- Fig. 5: shows a simplified representation of a second-type user input in the exemplary arrangement of first and second input areas of figure 4;
- Fig. 6: shows an exemplary arrangement of next-level selectable items as obtained at the end of the second-type user input presented with reference to figure 5;
- Fig. 7: shows an exemplary selection of a function for navigating different levels of a hierarchical menu in accordance with the inventive method;
- Fig. 8: shows an exemplary selection of an executable function from a next-level menu pertaining to that function in accordance with the inventive method;
- Fig. 9: shows a further exemplary selection of a function for navigating different levels of a hierarchical menu in accordance with the inventive method;
- Fig. 10: shows an exemplary path of an indexing device across various selectable items of the hierarchical menu during a selection process in which the user initially was not sure which item to select.

### Description of Embodiments

In the figures identical or similar elements are referenced using the same reference designators.

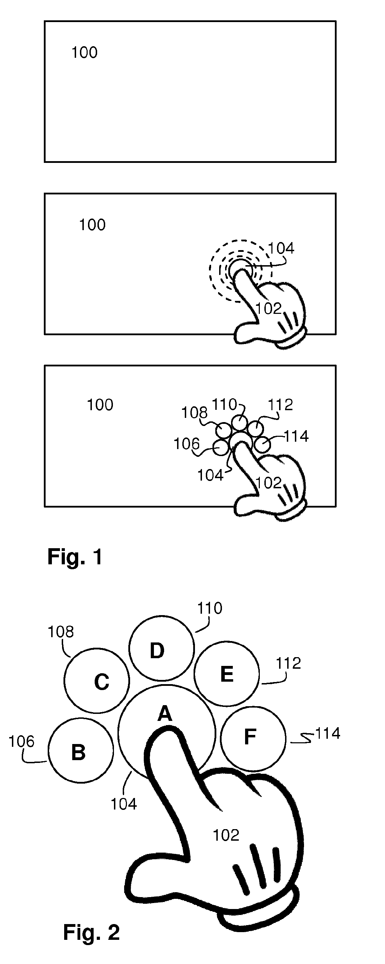

Figure 1 shows three representations of a touch screen at different stages of one aspect of the inventive method. The topmost part of figure 1 shows an empty screen 100 of a touch-enabled display. It is to be noted that the screen may also show any type of content, e.g. a general user interface, or a navigation screen showing a map, or multimedia content. However, this is irrelevant for this aspect of the inventive method.

The middle part of figure 1 shows the screen 100 during the activation of the hierarchical menu. A finger of a user's hand 102, representing an indexing device, touches the screen 100 of the touch-enabled display, maintaining touch contact. In response to receiving the touch input the area 104, in which the initial touch was received, becomes a first input area for the remainder of the method. An animation may be shown on the screen as a visual feedback for the user, indicating that the menu is activated, e.g. concentric rings spreading from the first input area, indicated in the figure by the dashed circles. Also, the first input area may be visually represented on the screen, e.g. by a solid circular shape or the like.

The lower part of figure 1 shows the screen 100 after the hierarchical menu is fully activated. The user's finger is still in contact with the first input area 104 on the touch-enabled display. Second input areas 106-114 are now arranged around the first input area 104, well within range of the user's finger. Various items of the hierarchical menu (not shown) are assigned to the second input areas, for selection by the user. The items of the hierarchical menu may represent a context menu, e.g., when the first input area 104 is located on or next to a graphical representation of a controllable or selectable function (not shown).

Figure 2 shows a first exemplary general arrangement of first and second input areas in accordance with the inventive method. The arrangement corresponds to the one shown in figure 1 and comprises first input area 104 and second input areas 106-114. The first input area is additionally labeled A, and the second input areas are additionally labeled B to F, the letters representing selectable items of the hierarchical menu. The letters may as well be replaced by text descriptive of the menu item, or by icons or other pictorial elements identifying respective menu items, or both. In the figure, the first and second input areas are circular in shape. The second input areas are arranged in a semi-circle adjacent to the first input area, which is slightly larger in diameter than the second input areas.

While providing different sizes of the input areas is not necessary it may simplify the operation.

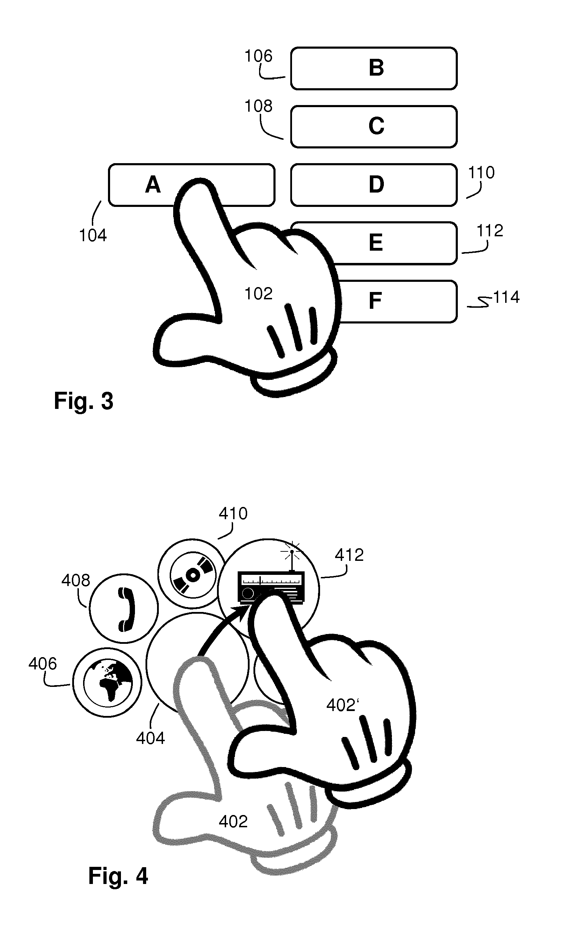

Figure 3 shows a second exemplary general arrangement of a first input area 104 and second input areas 106-114 in accordance with the inventive method. In figure 3 the first and second input areas are rectangular in shape. The second input areas 106-114 are arranged along a linear path passing next to the first input area 104. Like in figure 2 the second input areas are also labeled with letters A to F, representing selectable menu items, which may also be replaced with descriptive text or icons or the like.

Figure 4 shows a simplified representation of a first-type user input in an exemplary arrangement of a first input area 404 and second input areas 406-412. Second input area 406 bears an icon depicting a globe, representing an association with an internet browser. Second input area 408 bears an icon depicting a telephone handset, representing an association with a telephone function. Second input area 410 bears an icon depicting a compact disk, representing an association with a music player. Second input area 412 bears an icon depicting a radio receiver, representing an association with a tuner function. The user performs a swipe action, starting in the first input area 404 and targeting the second input area 412, for selecting a tuner as an audio source for listening. The swipe action is indicated by the hand 402 moving into the direction of the second input area 412. The different positions of the hand 402 at different times of the swipe action are indicated by the index dash and the grey outlines of the hand at the initial position. The item is selected by breaking contact between the finger and the touch display, i.e. by lifting the finger (not shown). In the figure, visual feedback is provided to the user by an enlarged reproduction of the selected radio icon in the second input area 412. The visual feedback may be provided when the finger enters the second input area, e.g. for facilitating the identification of the selectable item of the menu, or when the selection is made, as a confirmation of the selection, or both.

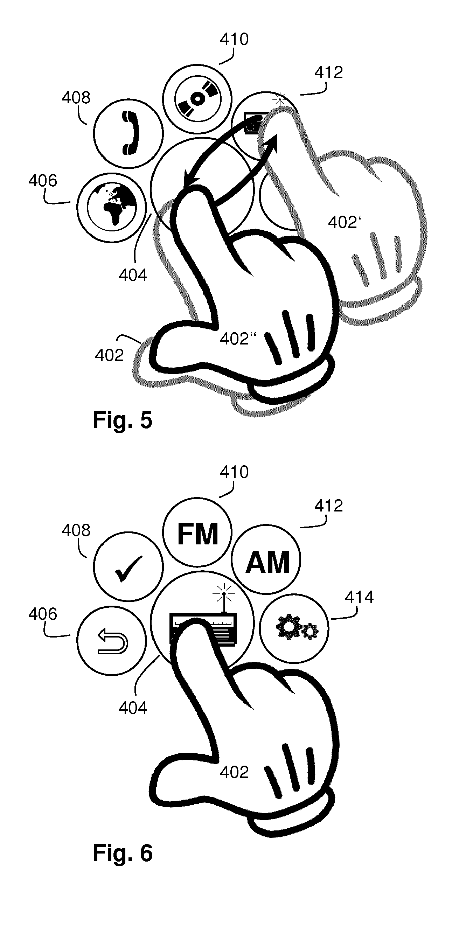

Figure 5 shows a simplified representation of a second-type user input in the exemplary arrangement of first and second input areas of figure 4. For entering a sub-menu related to one of the selectable items of the present or current menu the user performs a first swipe action, starting in the first input area 404 and targeting the second input area 412, and performs a second swipe action returning to the first input area 404, for selecting a sub-menu pertaining to the radio or tuner. The swipe actions are indicated by the hand 402 moving into the direction of the second input area 412 and back to the first input area 404. The different positions of the hand 402 at different times of the swipe action are indicated by the index dashes and the grey outlines of the hand at the initial and intermediate positions. The swipe actions are performed without lifting the finger from the touch-sensitive input device, and after the second-type user input has been terminated the finger is still in contact with the touch-sensitive input device.

Figure 6 shows an exemplary arrangement of next-level selectable items as obtained at the end of the second-type user input presented with reference to figure 5. The second input areas 406-414 are now associated with a new set of selectable items, which represents the set of current-level selectable items.

Second input area 410 is now associated with a selection option for selecting an FM reception mode of the radio tuner, and second input area 412 is now associated with a selection option for selecting an AM reception mode of the radio tuner. Second input area 414 is now associated with a selection option for further adjustment of the radio tuner. Selection of second input area 414 using a second-type user input will cause entering a next lower level of the hierarchical menu, in which less often used adjustments may be accessible, e.g. for setting tuner sensitivity, bandpass filters and the like.

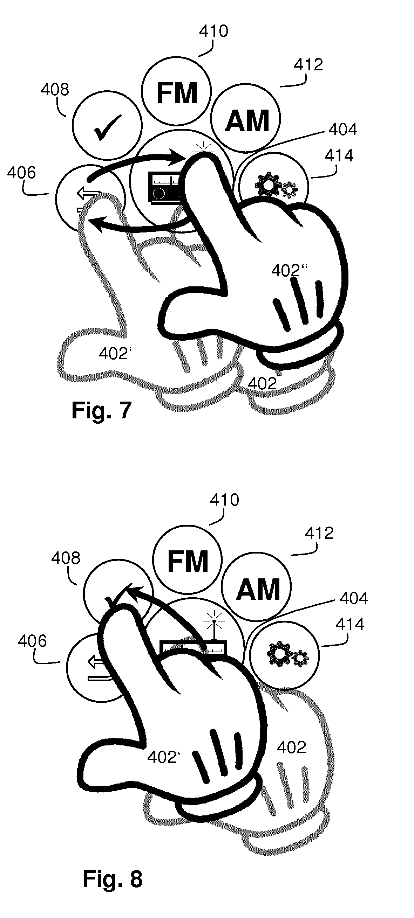

Second input area 406, which was previously associated with an internet browser function, is now associated with a 'return-to-previous-level'-function. Selecting the 'return-to-previous-level'-function using a second-type user input, as shown in figure 7, will bring up the next higher level of the hierarchical menu. In this example the next higher level corresponds to the menu shown in figure 5. When a hierarchical menu is more than two levels deep a dedicated second input area associated with a function for directly returning to the top level may be provided (not shown), which can be accessed or selected in the same way as the return function shown in figure 7. The second input area may show a corresponding icon, for example a symbol representing a house for 'return home', or the like.

Second input area 408 is now associated with an execute function, identified by a check symbol. The execute function allows for executing an executable process or function for which the current-level selectable items represent further adjustment options. In this example, the previous selection was directed to a radio tuner function, which by itself is an executable function, i.e. a user can decide to select the radio tuner which, without any further user input, would simply play the radio station that was previously selected. However, in figure 6 the user has decided to enter a next lower level of the hierarchical menu, which next lower level provides further selection or adjustment options related to the operation of the radio tuner. If a user decides not to perform any further selection of further options or adjustments related to the operation of the radio tuner, but wishes to simply listen to the previously selected radio station, he or she may perform a first-type user input targeted to second input area 408, as shown in figure 8, which is associated with the execute function. It may also be possible to simply break the contact between the indexing device and the touch screen while in the first input area, for executing the executable function for which the current-level selectable items represent further adjustment options (not shown). However, it may be preferred to consistently interpret, throughout all menu levels, breaking contact between the indexing device and the touch screen while in the first input area as a command for terminating the hierarchical menu without making a selection. Other examples of executable processes or functions include, but are not limited to, selecting a music player function or a telephone function.

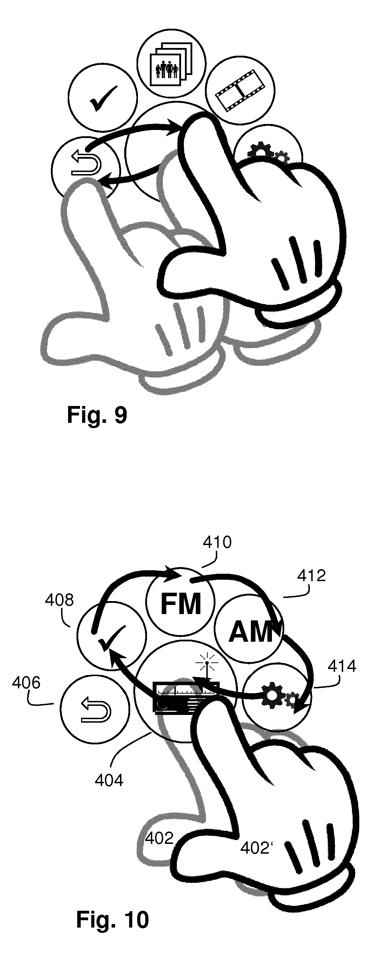

Figure 9 shows another example of selecting the return function using a second type user input in order for accessing a next higher level of the hierarchical menu. In figure 9 the return function is selected from a gallery menu that, inter alia, provides access to photos or videos, represented by corresponding symbols in the second input areas.

Figure 10 shows an exemplary path of an indexing device across various selectable items of the hierarchical menu during a selection process in which the user initially was not sure which item to select. While in a menu providing further options for a radio tuner function a user initially swipes towards the execute function associated with second input area 408. However during the swiping the user decides not to execute the radio tuner function but considers selecting FM reception, associated with second input area 410. Still undecided, the user then considers selecting AM reception, associated with second input area 412. Before effectively selecting the AM reception the user changes his or her mind and decides to perform further adjustments of the radio tuner operation, which can be accessed by entering the next lower level of the hierarchical menu. Entering the next lower level of the hierarchical menu is associated with second input area 414. Since the user did not break contact between the indexing device and the touch sensitive input device while swiping over the various second input areas 408-412, and returns to the first input area 404 only after swiping to second input area 414, only the last-visited second input area 414 is selected. Selection of second input area 414 will cause entering the next level of the hierarchical menu (not shown).

## Claims

1. A method of controlling a touch-sensitive input device for navigating a hierarchical menu of selectable items, wherein each selectable icon is assigned to a respective corresponding second input area arranged within a predefined distance of a first input area of the touch-sensitive input device, wherein the selectable items currently assigned to second input areas represent a current level of the hierarchical menu, the method comprising, for selecting a first one of the selectable items:
- receiving a first-type user input targeted to a second input area assigned to the first one of the selectable items, the first-type user input comprising swiping an indexing device across the touch-sensitive input device, from the first input area towards the targeted second input area, and subsequently breaking contact between the indexing device and the touch-sensitive input device while within the targeted second input area,
or comprises, for activating a next level of the hierarchical menu related to a first one of the selectable items:
- receiving a second-type user input involving a second input area assigned to the first one of the selectable items, the second-type user input comprising swiping the indexing device across the input device from the first input area towards a second input area assigned to the first one of the selectable items and back to the first input area, maintaining contact between the indexing device and the touch-sensitive input device, and
- assigning, in response to receiving the second-type user input, one or more next-level selectable items to corresponding second input areas, replacing at least some of the previous assignments, wherein the next-level selectable items become current-level selectable items for recursive execution of the method.

2. The method of claim 1, further comprising, after activating a next level of the hierarchical menu for a previous-level selectable item associated with an executable process or function, for selecting the executable process or function itself, receiving a first-type user input directed to a second input area associated with an execution command.

3. The method of claim 1, further comprising, for initially activating the hierarchical menu:
- controlling the touch-sensitive input device to receive a third-type user input, the third-type user input comprising placing an indexing device in a first input area of the touch-sensitive input device for at least a predetermined first time period, and
- assigning, in response to receiving the third-type user input, one or more selectable first-level items to respective second input areas, the second input areas being arranged within a predefined distance of the first input area, wherein the first-level items correspond to current-level selectable items.

4. The method of claim 1, further comprising keeping the hierarchical menu activated at least while the indexing device is in contact with the touch-sensitive input device, or when a duration of a temporarily interrupted contact between the indexing device and the touch-sensitive input device is shorter than a predetermined time.

5. The method of claim 1, further comprising, while in a level of the hierarchy that is not a topmost level of the hierarchy, receiving a second-type user input involving a second input area associated with a command for returning to a next higher level or to the topmost level of the hierarchy.

6. The method of claim 1, further comprising, when the indexing device is placed in a second input area for at least a second time period without breaking contact with the touch-sensitive input device:
- animating a graphical representation of the selectable item associated with the second input area and/or presenting a message providing information about the selectable item adjacent to the graphical representation.

7. The method of claim 1, further comprising arranging a first input area for receiving a user input within a predefined perimeter around an information item displayed on a display screen.

8. The method of claim 1, further comprising providing a temporary visual, audible or tactile feedback in response to a user input.

9. The method of claim 1, wherein the selectable items associated with the second input areas are arranged in an at least partially circular manner within a perimeter around the first selectable item.

10. A user interface device comprising a touch-sensitive input device, a display, a microprocessor, a volatile and a non-volatile memory, wherein the non-volatile memory stores computer program instructions which, when executed by the microprocessor in conjunction with the volatile memory, perform the method of one of claims 1 to 9.
